# EUROPEAN PATENT APPLICATION

(11) **EP 4 657 200 A1**
(43) Date of publication of application: **03.12.2025**
(21) Application number: 24179259.7
(22) Date of filing: 31.05.2024
(51) Int. Cl.: G05F 1/67, H02J 50/00

(54) **AN ADAPTIVE MPPT TIMER OF A POWER MANAGER FOR AN ENERGY HARVESTING SYSTEM AND A METHOD OF USING SUCH ADAPTIVE MPPT TIMER**

(71) Applicant: Nexperia B.V., 6534 AB Nijmegen (NL)
(72) Inventor: van Wietmarschen, Luc, Utrecht (NL); van der Hout, Peter, Hellevoetsluis (NL); Babyan Mashhad, Samaneh, Delft (NL); van Staveren, Arie, Hazerswoude (NL); Campos Martins, Gustavo, Delft (NL)
(74) Representative: Pjanovic, Ilija

(57) **Abstract**

A method is presented for running a maximum power point tracker (MPPT) in a controller module. The method includes running (221) the MPPT during an MPPT active update cycle; setting (231) an adaptive sleep interval, tₛₗₑₑₚ, depending on whether or not power control settings were changed during the MPPT active update cycle; and sleeping (241) for the tₛₗₑₑₚ amount of time before returning to running the MPPT for a new MPPT active update cycle. Further presented are an MPPT state machine implemented the method, a controller module comprising such MPPT state machine, a power manager comprising such controller module, an energy harvesting system comprising such power manager and a device comprising such energy harvesting system.

## Description

### Technical field

The present disclosure relates to a method of running a maximum power point tracker (MPPT) in a controller module, an MPPT state machine implementing such method, a controller module comprising such MPPT state machine, a power manager comprising such controller module, an energy harvesting system comprising such power manager and a device comprising such energy harvesting system. More specifically, the present disclosure relates to a sleep interval used with the MPPT.

### Background

An MPPT is used with energy transducers to optimize the power output from the energy transducer. Energy transducers capture and convert ambient energy from the surrounding environment into usable electrical energy. This harvested energy can then be used to power electronic devices or charge batteries.

There are various types of energy transducers, each designed to capture different forms of ambient energy. Some common types include solar energy transducers that capture energy from sunlight using photovoltaic cells, thermoelectric energy transducers that convert temperature differences between two surfaces into electrical energy, vibration energy transducers that capture mechanical vibrations from sources such as machinery, vehicles or human motion and convert this into electrical energy using piezoelectric materials or electromagnetic induction, radio frequency (RF) energy transducers that capture energy from ambient RF signals, such as Wi-Fi, cellular, or radio transmissions, using antennas and rectifying circuits, wind energy transducers that capture energy from airflow and convert this into electrical energy using small turbines or piezoelectric materials, and hydrokinetic energy transducers that capture energy from flowing water using turbines or oscillating hydrofoils.

Energy transducers may be used in various applications and are particularly useful in low-power applications and applications such as wireless sensor networks, wearable electronics, remote monitoring systems and internet-of-things (IoT) devices, where they can provide a continuous and sustainable power source without the need for frequent battery replacements or access to grid power.

An MPPT monitors the energy harvesting transducer and adjusts the electrical operating point to ensure that the energy transducer operates at its maximum power point (MPP). The MPP is the point on the current-voltage (I-V) curve where the product of the current and voltage is maximized, resulting in the highest possible power output from the panels under the given conditions.

MPPT controllers typically use algorithms to calculate the optimal operating voltage and current for the energy transducer, and then adjust the electrical characteristics of the system, such as the voltage and current being delivered to the load or battery bank, to ensure that the energy transducer is operating at the MPP. By constantly tracking and adjusting the operating point, MPPT controllers can significantly increase the efficiency and power output of energy transducers, especially in variable environmental conditions.

### Summary

A summary of aspects of certain examples disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects and/or a combination of aspects that may not be set forth.

The present disclosure provides an improved MPPT controller, in particular regarding a sleep interval used with the MPPT of the MPPT controller.

According to an aspect of the present disclosure, a method of running an MPPT in a controller module is presented. The method may include running the MPPT during an MPPT active update cycle. The method may further include setting an adaptive sleep interval, tₛₗₑₑₚ, depending on whether or not power control settings were changed during the MPPT active update cycle. The method may further include sleeping for the tₛₗₑₑₚ amount of time before running the MPPT for a next MPPT active update cycle.

In an embodiment, the running of the MPPT may include executing an MPPT algorithm and an MPPT profile for the MPPT active update cycle. The running of the MPPT may further include tracking if power control settings need to be changed and controlling an operation of a power manager accordingly.

In an embodiment, the setting of tₛₗₑₑₚ may include, if it is determined that the power control settings were not changed during the MPPT active update cycle, increasing tₛₗₑₑₚ.

In an embodiment, tₛₗₑₑₚ may be increased using one of: a multiplication with a preset value, Δ, such that tₛₗₑₑₚ = tₛₗₑₑₚ*Δ with Δ>1 and preferably Δ=2; an addition with a preset value, Δ, such that tₛₗₑₑₚ = tₛₗₑₑₚ+Δ with Δ>0; and a mathematical function increasing the value of tₛₗₑₑₚ.

In an embodiment, if tₛₗₑₑₚ exceeds a preset maximum sleep time, tₘₐₓ, tₛₗₑₑₚ may be set to tₘₐₓ.

In an embodiment, the setting (231) of tₛₗₑₑₚ may include, if it is determined that the power control settings were changed during the MPPT active update cycle, resetting tₛₗₑₑₚ to a preset minimum sleep time, tₘᵢₙ.

In an embodiment, the resetting of tₛₗₑₑₚ may be performed conditionally depending on a threshold level.

In an embodiment, the setting of tₛₗₑₑₚ may include, if it is determined that the power control settings were changed during the MPPT active update cycle, decreasing tₛₗₑₑₚ.

In an embodiment, tₛₗₑₑₚ may be decreased using one of: a multiplication with a preset value, Δ, such that tₛₗₑₑₚ = tₛₗₑₑₚ*Δ with 0<Δ<1; a subtraction with a preset value, Δ, such that tₛₗₑₑₚ = tₛₗₑₑₚ-Δ with tₛₗₑₑₚ>Δ>0; and a mathematical function decreasing the value of tₛₗₑₑₚ.

According to an aspect of the present disclosure, an MPPT state machine of a controller module is presented. The MPPT state machine may be configured to execute a method having one or more of the above described features. In the MPPT state machine, an MPPT running state may be configured to state transition to an MPPT ending state. The MPPT ending state may be configured to state transition to an MPPT sleep state. The MPPT sleep state may be configured to state transition to the MPPT running state. The MPPT running state may be configured for running the MPPT during an MPPT active update cycle. The MPPT ending state may be configured for setting an adaptive sleep interval, tₛₗₑₑₚ, depending on whether or not power control settings were changed during the MPPT active update cycle. The MPPT sleep state may be configured for sleeping for the tₛₗₑₑₚ amount of time.

According to an aspect of the present disclosure, a controller module is presented. The controller module may include an MPPT state machine as described above.

According to an aspect of the present disclosure, a power manager is presented. The electrical power unit may include a power converter module, such as a DC to DC converter, an AC to DC converter or an AC to AC converter, configured to convert an electrical power received from an energy transducer for use by a load. The electrical power unit may further include a controller module as described above.

According to an aspect of the present disclosure, an energy harvesting system is presented. The energy harvesting system may include an energy transducer. The energy harvesting unit may further include a power manager as described above.

In an embodiment, the energy harvesting system may further include a micro-controller and a controller module that are communicatively connected. One or more variables used for setting then adaptive sleep interval may be configurable in the controller module using the micro-controller.

According to an aspect of the present disclosure, a device is presented. The device may include an energy harvesting system as described above. The device, when in use, may apply a load to the energy harvesting system.

### Brief description of the Drawings

Embodiments of the present disclosure will now be described, by way of example only, with reference to the accompanying schematic drawings in which corresponding reference symbol indicate corresponding parts, in which:
Fig. 1 shows a schematic overview of a non-limiting example embodiment of an energy harvesting system;
Fig. 2 shows an example embodiment of an MPPT state machine of a controller module; and
Fig. 3 shows an example embodiment of a computing system.

The figures are intended for illustrative purposes only, and do not serve as restriction of the scope of the protection as laid down by the claims.

### Detailed description

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the present disclosure is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present disclosure should be or are in any single example of the present disclosure. Rather, language referring to the features and advantages is understood to mean that a specific feature, advantage, or characteristic described in connection with an embodiment is included in at least one embodiment of the present disclosure. Thus, discussions of the features and advantages, and similar language, throughout this specification may, but do not necessarily, refer to the same example.

Furthermore, the described features, advantages, and characteristics of the present disclosure may be combined in any suitable manner in one or more embodiments. One skilled in the relevant art will recognize, in light of the description herein, that the present disclosure may be practiced without one or more of the specific features or advantages of a particular embodiment. In other instances, additional features and advantages may be recognized in certain embodiments that may not be present in all embodiments of the present disclosure. Reference throughout this specification to "one embodiment," "an embodiment," or similar language means that a particular feature, structure, or characteristic described in connection with the indicated embodiment is included in at least one embodiment of the present disclosure. Thus, the phrases "in one embodiment," "in an embodiment," and similar language throughout this specification may, but do not necessarily, all refer to the same embodiment.

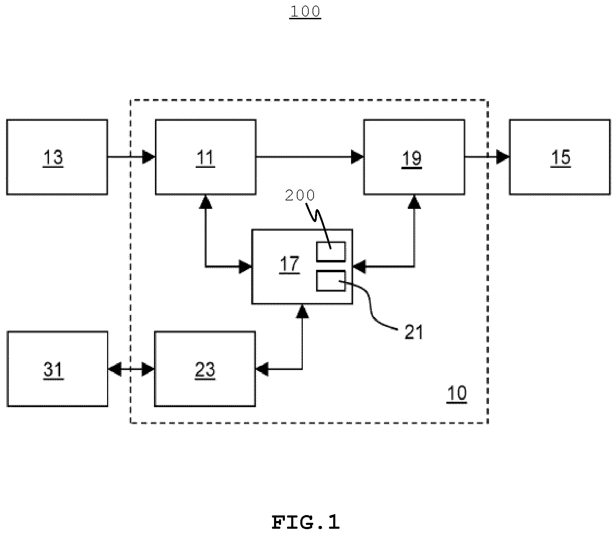

Fig. 1 shows a schematic overview of a non-limiting example embodiment of an energy harvesting system 100. The energy harvesting system 100 includes an energy transducer 13 and a power manager 10 for the energy transducer 13. The power manager 10 may be arranged for converting a low-power alternating current (AC) or a low-power direct current (DC) input signal received from the energy transducer 13, such as but not limited to an RF or solar energy transducer, into an output signal, such as an AC or DC output signal, for powering a load 15, such as but not limited to an electrical energy storage element such as a battery, an loT sensor or a wireless sensor node (WSN). In, e.g., loT devices and WSNs, the energy transducer 13 typically provides a very low, e.g. mV, voltage level which needs to be converted to much higher levels, e.g. 1V to 5V, suitable for the load 15.

The energy transducer 13 may be implemented as a single module or as a plurality of modules. A non-limiting example of an energy transducer 13 including a single module in the field of solar energy is a single solar panel. A non-limiting example of an energy transducer 13 including multiple modules in the field of solar energy is a plurality of photovoltaic cells or a plurality of solar panels. It will be understood that other examples of single module and multiple modules energy transducers 13 exist in fields other than solar energy harvesting.

In an example embodiment, the load 15 may be part of the energy harvesting system 100. In another example embodiment, the load 15 may be external to and electrically connectable to the energy harvesting system 100.

The power manager 10 may include a power converter module 11, in the following non-limiting example a DC-DC power converter module, arranged for converting the low-power direct current input signal into the direct current output signal, and a sensor module 19 coupled to direct current output of the DC-DC converter module 11. The sensor module 19 may be arranged for measuring the direct current output to the load 15, for example by measuring the voltage drop across a resistor comprised in the sensor module 19.

The power manager 10 may further include a controller module 17. The controller module 17 is operably coupled to the DC-DC converter module 11 and the sensor module 19. The controller module 17 is arranged for controlling the DC-DC converter module 11 such that the low-power direct current input signal is converted into the direct current output signal according to an MPPT profile. The controller module 17 optionally includes a memory 21 for storing one or more MPPT profiles and/or an MPPT algorithm (or MPPT routine).

An MPPT profile and an MPPT algorithm may work together to optimize the performance of the energy harvesting system 100 by tracking the MPP of the energy transducer 13. The MPPT algorithm may be configured to continuously monitor voltage and current output of the energy transducer 13 and calculate the optimal operating point to maximize power output. The MPPT profile may define the overall behavior or operating strategy of the controller module 17 by defining how the controller module 17 should respond to changes in environmental conditions. The MPPT profile may include configuration parameters that define how the MPPT algorithm operates within the controller module 17. These parameters may, e.g., specify an algorithm type, tuning parameters and operating limits. The MPPT algorithm may use the information provided by the MPPT profile to adapt its behavior in response to changing environmental conditions. For example, the algorithm may adjust its tracking speed, sensitivity, or operating thresholds based on the profile settings. By working together, the MPPT profile and MPPT algorithm ensure that the controller module 17 can optimize the performance of the energy harvesting system 100 system under a wide range of conditions, wherein the MPPT profile guides the overall strategy, while the MPPT algorithm handles the detailed control logic and calculations to track the MPP effectively.

The MPPT applied by the power manager 10 may include an MPPT algorithm that is optimized for a certain energy harvesting application and energy transducer 13. The MPPT algorithm may be defined by an MPPT profile stored in the memory 21 of the controller module 17. The MPPT algorithm may change the operating of the DC-DC converter module 11 by changing one or more MPPT profile parameters of the DC-DC converter module 11. The MPPT profile parameters may, e.g., include one or more of a switching frequency of the DC-DC converter module 11, a conversion ratio of the DC-DC converter module 11, a number of parallel operating power switches comprised in the DC-DC converter module 11, a resistor value of the resistor comprised in the sensor module 19, an MPPT running interval, an overcurrent value and an undercurrent value.

An MPPT profile may provide an application specific operation of the power manager 10. The controller module 17 may operate the DC-DC converter module 11 according to an MPPT profile in which the MPPT is bypassed. The MPPT may, e.g., be bypassed by the controller module 17 such that no power is dissipated by the controller module 17, and/or change the resistor value of the resistor comprised in the sensor module 19 such that no power is dissipated in the sensor module 19.

The power manager 10 may be operably coupled, via a communication interface 23, with a micro-controller 31 external to the power manager 10. Via the communication interface 23, a command signal may be received from the micro-controller 31. After successfully transferring the command signal to the controller module 17, the external micro-controller 31 may be be removed from the power manager 10, for example by unplugging the micro-controller 31 from the communication interface 23.

In an example, a command signal from the micro-controller 31 may be used to select a specific MPPT profile out of the number of MPPT profiles stored in the memory 21. The selected MPPT profile may then be used by the controller module 17 to operate the DC-DC converter module 11 according to the selected MPPT profile. In another example, a command signal from the micro-controller 31 may include one or more additional MPPT profiles not already present in the memory 21, wherein the controller module 17 is arranged to receive a command signal through the communication interface 23 for storing the respective MPPT profile or profiles in the memory 21 of the controller module 17. In another example, a command signal from the micro-controller 31 may be used to modify one or more parameters of an MPPT profile in the memory 21. In another example, a command signal from the micro-controller 31 may be used to upload or modify an MPPT algorithm in the memory 21.

Disadvantageously, MPPT typically requires relatively high energy to operate. Furthermore, energy harvesting systems, such as the energy harvesting system 100, may require frequent MPPT profile or MPPT parameter adjustments in fast-changing environments that have an impact on the yield of the energy transducer 13. On the other hand, the energy harvesting system preferably also operates optimally in slow-changing environments. Complex, power hungry control algorithms are to be avoided to optimize efficiency.

The MPPT optimizes the setting of a power manager 10 in order to extract maximum electrical power from the energy transducer 13. Such optimization costs electrical power and is therefore not performed continuously. Instead, a sleep interval for the MPPT is typically implemented wherein the MPPT is not executed by the controller module 17, i.e., the MPPT is inactive for the preset amount of time of the sleep interval to save energy.

The optimal duration of the sleep interval to be preset in the controller module 17 is found difficult to be determined. The sleep interval preferably reflects the need to update the settings of the power manager 10, typically because of a change in the input power from the energy transducer 13.

A change in the input power may be caused by a variety of environmental factors, depending on the type of energy transducer 13 and the environment where the energy transducer 13 is used. The input power may, e.g., change as a result of a user moving a wearable device including an energy transducer 13 in the form of a vibration energy transducer, or a day/night cycle influencing an energy transducer 13 in the form of a solar energy transducer. Some of such changes in input power may happen rapidly and often, while others may be sparse.

Using a single sleep interval setting to cover all possible scenarios influencing the input power of the energy transducer 13, as typically implemented in known energy harvesting systems, is found to be suboptimal.

The present disclosure presents an adaptive sleep interval to balance (possibly quick) responses to changing environmental conditions, while having a low consumption of the power manager 10 when the environment is not or hardly changing.

In an example embodiment, the adaptive sleep interval may be adjusted when an MPPT setting was changed during the last (as in previous) MPPT active update cycle. If the controller module 17 did not need to change the settings of the power manager 10 during the last MPPT active update cycle, this may be used as a determination that the environment has not changed and that the adaptive sleep interval may be increased. If on the other hand the controller module 17 had to change the settings of the power manager 10 during the last MPPT active update cycle, the adaptive sleep interval may be reset to a preset minimum value to ensure that any fast changes in the environment are captured.

In an example embodiment, a controller module 17 is presented that implements an MPPT with an adaptive sleep interval. Hereto, the controller module 17 may implement an extension to an existing MPPT profile, a new MPPT profile or an improved MPPT algorithm running in conjunction with an MPPT profile. The controller module 17 may thus improve the overall efficiency by lowering energy consumption when electrical power delivered by the energy transducer 13 is relatively stable and no new MPPT update is needed, e.g., in slow changing environments. Additionally, the controller module 17 may improve the overall efficiency when there is no energy being provided by the energy transducer 13. On the other hand, the controller module 17 maintains a quick response time in fast changing environments.

The controller module 17 may implement an MPPT state machine 200 for operating an MPPT profile and executing an MPPT algorithm. With the MPPT state machine 200, the controller module 17 can make decisions within the MPPT profile to change any of the variables within the profile or the even change between multiple profiles. Depending on the MPPT profile, the MPPT state machine 200 may include transitions between states of the MPPT state machine 200 based on variables within the profile and/or based on data obtained from the sensor module 19. The MPPT state machine 200 may be implemented in the controller module 17 to execute an MPPT profile and MPPT algorithm in accordance with the rules of the MPPT state machine 200.

Preferably, the MPPT state machine 200 is hardcoded in the controller module 17, e.g., as a programmable logic device (PLD) such as a field-programmable gate array (FPGA), synthesized into a hardware implementation using a hardware description language (HDL), using a state machine controller, or using an application-specific integrated circuit (ASIC). Alternatively, the MPPT state machine 200 may be implemented in software running in the controller module 17. When implemented in software, the MPPT state machine 200 may be stored in the memory 21 of the controller module 17.

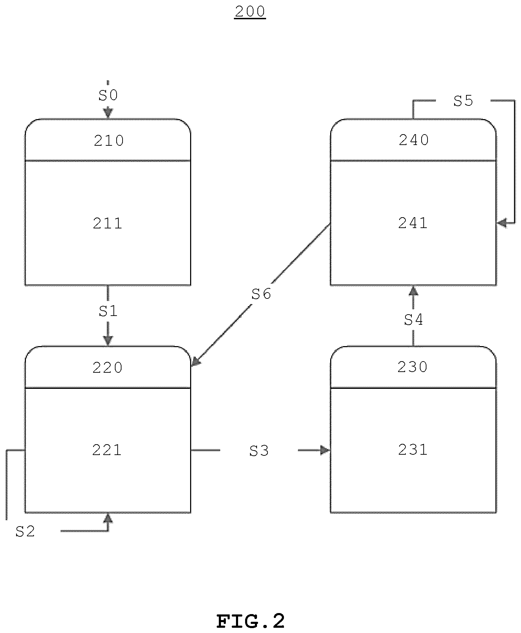

Fig. 2 shows an example embodiment of an MPPT state machine 200 of a controller module 17 implementing an adaptive sleep interval for the MPPT operation. Fig. 2 shows a simplified version of a state machine of a controller module 17 focusing on states and processes involving the adaptive sleep interval. In Fig. 2, S0 to S6 depict state transitions, the even numbers 210-240 depict different states and the odd numbers 211-241 depict process that may be run in a state.

With state transition S0, the MPPT state machine 200 may be initialized to an MPPT reset state 210. S0 typically occurs upon initialization or first use of the energy harvesting system 100, e.g., when the energy harvesting system 100 is turned on after being powered off. The MPPT reset state 210 may includes a resetting 211 of the adaptive sleep interval (hereinafter also referred to as "tₛₗₑₑₚ") to a preset minimum sleep time (hereinafter also referred to as "tₘᵢₙ"). Hereto, the controller module 17 may execute tₛₗₑₑₚ = tₘᵢₙ or any other operation having the same result.

With state transition S1, the MPPT state machine 200 enters an MPPT running state 220. The MPPT running state 220 may include running 221 an MPPT. The running 211 of the MPPT may include execution of an MPPT algorithm and an MPPT profile for the current MPPT active update cycle in any manner known per se. While in the MPPT running state 220, it may be tracked if power control settings need to be changed and the operation of the power manager 10 may be controlled by the controller module 17 accordingly. State transition S2 indicates staying in the MPPT running state 220 until the current MPPT active update cycle is done.

With state transition S3, the MPPT state machine 200 enters an MPPT ending state 230. The MPPT ending state 230 may include setting 231 the adaptive sleep interval. Setting 231 the adaptive sleep interval may include a determination whether or not power control settings were changed during the last (as in previous) MPPT active update cycle, i.e., in the previous MPPT running state 220.

The setting 231 of the adaptive sleep interval may include, if it is determined that the power control settings were changed during the last MPPT active update cycle, resetting tₛₗₑₑₚ to tₘᵢₙ. In an example, if it is determined that the power control settings were changed during the last MPPT active update cycle, tₛₗₑₑₚ is reset to tₘᵢₙ conditionally, e.g., depending on a threshold level. A threshold level may be an integer threshold level indicating a desired amount of change in the power converter settings that is deemed significant. A non-limiting example of a threshold level is a change in DC-DC converter ratio by at least two steps.

The setting 231 of the adaptive sleep interval may include, if it is determined that the power control settings were not changed during the last MPPT active update cycle, increasing tₛₗₑₑₚ, e.g., using a multiplication with a preset value "Δ" such that tₛₗₑₑₚ = tₛₗₑₑₚ*Δ with Δ>1 and preferably Δ=2, or, e.g., using an addition with a preset value "Δ" such that tₛₗₑₑₚ = tₛₗₑₑₚ+Δ with Δ>0, or using any other mathematical function increasing the value of tₛₗₑₑₚ. In an example, the amount by which tₛₗₑₑₚ is increased may be variable, e.g., depending on the number of times that tₛₗₑₑₚ has been increased before. The value of tₛₗₑₑₚ may be maximized by a preset maximum sleep time (hereinafter also referred to as "tₘₐₓ"). Hereto, the controller module 17 may execute tₛₗₑₑₚ = max(t_{sleep;}tₘₐₓ) or any other operation having the same result.

In an alternative embodiment, the setting 231 of the adaptive sleep interval may include, if it is determined that the power control settings were changed during the last MPPT active update cycle, instead of resetting tₛₗₑₑₚ, decreasing tₛₗₑₑₚ, e.g., using a multiplication with a preset value "Δ" such that tₛₗₑₑₚ = tₛₗₑₑₚ*Δ with 0<Δ<1, or, e.g., using a subtraction with a preset value "Δ" such that tₛₗₑₑₚ = tₛₗₑₑₚ-Δ with tₛₗₑₑₚ>Δ>0, or using any other mathematical function decreasing the value of tₛₗₑₑₚ. In an example, the amount by which tₛₗₑₑₚ is decreased may be variable, e.g., depending on the number of times that tₛₗₑₑₚ has been increased and/or decreased before.

With state transition S4, the MPPT state machine 200 enters an MPPT sleep state 240. The MPPT sleep state 240 may include sleeping 241 the MPPT state machine 200 for a tₛₗₑₑₚ amount of time. State transition S5 indicates staying in the MPPT sleep state 240 until the tₛₗₑₑₚ amount of time has lapsed.

With state transition S6, the MPPT state machine 200 enters the MPPT running state 220 again.

The value of the adaptive sleep interval tₛₗₑₑₚ may be stored as a variable, e.g., in the memory 21 of the controller module 17.

The minimum sleep time tₘᵢₙ and/or the maximum sleep time tₘₐₓ may be preconfigured and/or hardcoded in the MPPT state machine 200. In an example, the minimum sleep time tₘᵢₙ and/or the maximum sleep time tₘₐₓ may be stored as a configurable variable, e.g., in the memory 21 of the controller module 17. In an example, the minimum sleep time tₘᵢₙ and/or the maximum sleep time tₘₐₓ may be modifiable using communication interface 23, e.g., by a command signal received from a micro-controller 31.

The MPPT state machine 200 may be configurable to enable and disable use of the adaptive sleep interval. Disabling use of the adaptive sleep interval, e.g., using communication interface 23 and a command signal received from a micro-controller 31, may result in the MPPT ending state 230 keeping tₛₗₑₑₚ unchanged under any condition or the state transition S3 transitioning into the MPPT sleep state 240 directly. Enabling use of the adaptive sleep interval, e.g., using communication interface 23 and a command signal received from a micro-controller 31, may result in the adaptive sleep interval being processed by the MPPT ending state 230 as described above.

A controller module implementing an adaptive sleep interval, such as the controller module 17 shown in Fig. 1 implementing the MPPT state machine 200 of Fig. 2, may advantageously be used in an energy harvesting system, such as the energy harvesting system 100 of Fig. 1.

A controller module implementing an adaptive sleep interval may be implemented in a power management semiconductor chip. Such power management semiconductor chip may be integrated with an energy transducer, such as energy transducer 13.

Non-limiting examples of devices that advantageously can make use of an energy harvesting system such as the energy harvesting system 100 of Fig. 1, e.g., devices that apply a load 15 to the energy harvesting system 100, include low power appliances such as wearables and loT devices, remote controls, electronic shelf labels, smart watches and smart wearables.

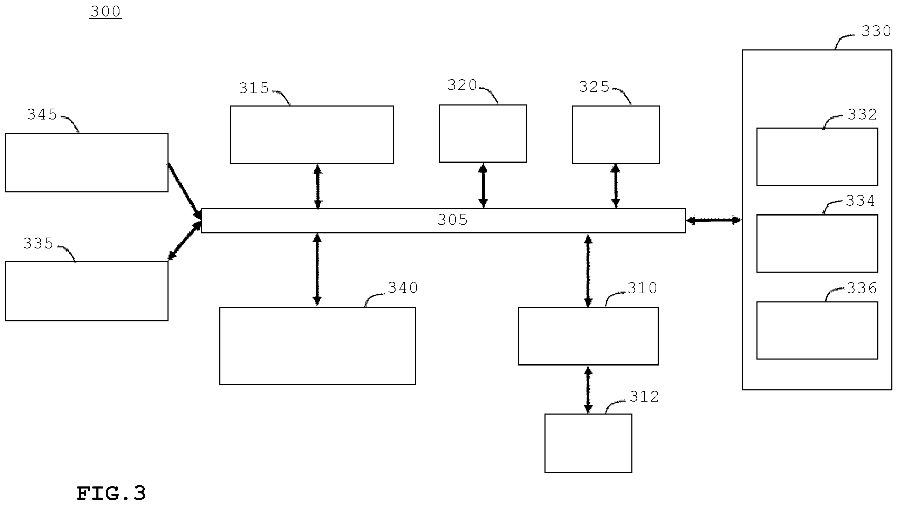

FIG. 3 shows an example embodiment of a computing system 300 for implementing certain aspects of the present technology. In various examples, the computing system 300 may be any computing device making up the micro-controller 31, or a device including an energy harvesting system such as energy harvesting system 100, or any other computing system described herein.

The computing system 300 may include any component of a computing system described herein, which components may be in communication with each other using connection 305. The connection 305 may be a physical connection via a bus, or a direct connection into processor 310, such as in a chipset architecture. The connection 305 may also be a virtual connection, networked connection, or logical connection.

In some implementations, the computing system 300 may be a distributed system in which the functions described in this disclosure may be distributed within a datacenter, multiple datacenters, a peer network, etc. In some embodiments, one or more of the described system components represents many such components each performing some or all of the functions for which the component is described. In some embodiments, the components may be physical or virtual devices.

The example system 300 includes at least one processing unit (CPU or processor) 310 and a connection 305 that couples various system components including system memory 315, such as read-only memory (ROM) 320 and random-access memory (RAM) 325 to processor 310. The computing system 300 may include a cache of high-speed memory 312 connected directly with, in close proximity to, or integrated as part of the processor 310.

The processor 310 may include any general-purpose processor and a hardware service or software service, such as services 332, 334, and 336 stored in storage device 330, configured to control the processor 310 as well as a special-purpose processor where software instructions are incorporated into the actual processor design. The processor 310 may essentially be a completely self-contained computing system, containing multiple cores or processors, a bus, memory controller, cache, etc. A multi-core processor may be symmetric or asymmetric.

To enable user interaction, the computing system 300 may include an input device 345, which may represent any number of input mechanisms, such as a microphone for speech, a touch-sensitive screen for gesture or graphical input, keyboard, mouse, motion input, speech, etc. The computing system 300 may also include an output device 335, which may be one or more of a number of output mechanisms known to those of skill in the art. In some instances, multimodal systems may enable a user to provide multiple types of input/output to communicate with the computing system 300. The computing system 300 may include a communications interface 340, which may generally govern and manage the user input and system output. There is no restriction on operating on any particular hardware arrangement, and therefore the basic features here may easily be substituted for improved hardware or firmware arrangements as they are developed.

A storage device 330 may be a non-volatile memory device and may be a hard disk or other types of computer readable media which may store data that are accessible by a computer, such as magnetic cassettes, flash memory cards, solid state memory devices, digital versatile disks, cartridges, random access memories (RAMs), read-only memory (ROM), and/or some combination of these devices.

The storage device 330 may include software services, servers, services, etc., that, when the code that defines such software is executed by the processor 310, causes the system to perform a function. In some embodiments, a hardware service that performs a particular function may include a software component stored in a computer-readable medium in connection with the necessary hardware components, such as processor 310, connection 305, output device 335, etc., to carry out the function.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope thereof.

## Claims

1. A method of running a maximum power point tracker, MPPT, in a controller module (17), the method comprising:
step 1: running (221) the MPPT during an MPPT active update cycle;
step 2: setting (231) an adaptive sleep interval, tₛₗₑₑₚ, depending on whether or not power control settings were changed during the MPPT active update cycle;
step 3: sleeping (241) for the tₛₗₑₑₚ amount of time before returning to step 1.

2. The method according to claim 1, wherein the running (221) of the MPPT comprises:
executing an MPPT algorithm and an MPPT profile for the MPPT active update cycle; and
tracking if power control settings need to be changed and controlling an operation of a power manager (10) accordingly.

3. The method according to any one of the preceding claims, wherein the setting (231) of tₛₗₑₑₚ comprises:
if it is determined that the power control settings were not changed during the MPPT active update cycle, increasing tₛₗₑₑₚ.

4. The method according to claim 3, wherein tₛₗₑₑₚ is increased using one of:
a multiplication with a preset value, Δ, such that tₛₗₑₑₚ = tₛₗₑₑₚ*Δ with Δ>1 and preferably Δ=2;
an addition with a preset value, Δ, such that tₛₗₑₑₚ = tₛₗₑₑₚ+Δ with Δ>0; and
a mathematical function increasing the value of tₛₗₑₑₚ.

5. The method according to claim 3 or claim 4, wherein, if tₛₗₑₑₚ exceeds a preset maximum sleep time, tₘₐₓ, tₛₗₑₑₚ is set to tₘₐₓ.

6. The method according to any one of the claims 1-5, wherein the setting (231) of tₛₗₑₑₚ comprises:
if it is determined that the power control settings were changed during the MPPT active update cycle, resetting tₛₗₑₑₚ to a preset minimum sleep time, tₘᵢₙ.

7. The method according to claim 6, wherein the resetting of tₛₗₑₑₚ is performed conditionally depending on a threshold level.

8. The method according to any one of the claims 1-5, wherein the setting (231) of tₛₗₑₑₚ comprises:
if it is determined that the power control settings were changed during the MPPT active update cycle, decreasing tₛₗₑₑₚ.

9. The method according to claim 8, wherein tₛₗₑₑₚ is decreased using one of:
a multiplication with a preset value, Δ, such that tₛₗₑₑₚ = tₛₗₑₑₚ*Δ with 0<Δ<1;
a subtraction with a preset value, Δ, such that tₛₗₑₑₚ = tₛₗₑₑₚ-Δ with tₛₗₑₑₚ>Δ>0; and
a mathematical function decreasing the value of tₛₗₑₑₚ.

10. A maximum power point tracker, MPPT, state machine (200) of a controller module (17),
wherein the MPPT state machine is configured to execute the method according to any one of the claims 1-9,
wherein an MPPT running state (220) is configured to state transition (S3) to an MPPT ending state (230),
wherein the MPPT ending state (230) is configured to state transition (S4) to an MPPT sleep state (240),
wherein the MPPT sleep state (240) is configured to state transition (S6) to the MPPT running state (220),
wherein the MPPT running state (220) is configured for running (221) the MPPT during an MPPT active update cycle,
wherein the MPPT ending state (230) is configured for setting (231) an adaptive sleep interval, tₛₗₑₑₚ, depending on whether or not power control settings were changed during the MPPT active update cycle,
and wherein the MPPT sleep state (240) is configured for sleeping (241) for the tₛₗₑₑₚ amount of time.

11. A controller module (17) comprising a maximum power point tracker, MPPT, state machine (200) according to claim 10.

12. A power manager (10) comprising:
a power converter module (11) configured to convert an electrical power received from an energy transducer (13) for use by a load (15); and
a controller module (17) according to claim 11.

13. An energy harvesting system (100) comprising an energy transducer (13) and a power manager (10) according to claim 12.

14. The energy harvesting system (100) according to claim 13, further comprising a micro-controller (31) and a controller module (17) that are communicatively connected, and wherein one or more variables used for setting (231) an adaptive sleep interval are configurable in the controller module (17) using the micro-controller (31).

15. A device comprising an energy harvesting system (100) according to claim 13 or claim 14, wherein the device, when in use, applies a load 15 to the energy harvesting system (100).
